# EUROPÄISCHE PATENTSCHRIFT

(11) **EP 2 837 529 B1**
(45) Veröffentlichungstag und Bekanntmachung des Hinweises auf die Patenterteilung: **04.11.2015**
(21) Anmeldenummer: 13180109.4
(22) Anmeldetag: 12.08.2013
(51) Int. Cl.: B60N 2/58, B60N 2/70, B60N 2/48

(54) **Verfahren zur Umrüstung eines Fahrzeugsitzes**
Method for converting a vehicle seat
Procédé de rééquipement d'un siège de véhicule

(43) Veröffentlichungstag der Anmeldung: 18.02.2015
(73) Patentinhaber: Brabus GmbH, 46240 Bottrop (DE)
(72) Erfinder: Buschmann, Bodo, 46236 Bottrop (DE)
(74) Vertreter: Zenz Patentanwälte Partnerschaft mbB

(56) Entgegenhaltungen:
- DE-A1- 19 955 046
- DE-A1-102012 204 813
- DE-U1- 9 412 670
- US-A- 4 549 766

## Beschreibung

Die Erfindung betrifft ein Verfahren zum Umrüsten eines Fahrzeugsitzes, insbesondere eines Fahrer- oder Beifahrersitzes eines Personenkraftwagens.

Fahrzeugsitze für Personenkraftwagen sind in verschiedener Gestaltung bekannt. Grundsätzlich sind Fahrzeugsitze mit einer inneren, meist metallischen Stützstruktur ausgestattet, die von Polsterungen, insbesondere geschäumten Polsterungen umgeben sind. Diese Polsterungen dienen einerseits dem Sitzkomfort, andererseits aber insbesondere auch der sicheren Aufnahme des Fahrers während verschiedener Fahrsituationen oder auch Unfallsituationen. Die Kopfstütze spielt unter Sicherheitsaspekten bei Fahrzeugsitzen eine entscheidende Rolle. Die Stützstruktur der Kopfstütze muss in kritischen Situationen im Halsbereich des Fahrers ausreichend Stütze geben, insbesondere den Kopf beim Zurückschnellen in Unfallsituationen auffangen. Gleichwohl muss eine bestmögliche Polsterung erfolgen, welche Komfort bei Anlage an der Kopfstütze verbessert und eine Dämpfung bei einem Aufprall auf die Kopfstütze bietet.

Beispielsweise offenbart die Anmeldung DE 195 13 705 einen Fahrzeugsitz für Kraftfahrzeuge mit einer Höheneinstellung der Kopfstütze. Diese Art der Sitze ist in Serienfahrzeugen häufig anzutreffen, wobei eine Kopfstütze über eine Stützstruktur mit der Rückenlehne des Sitzes verbunden ist. Die innere Stützstruktur einer anderen Kopfstütze ist beispielsweise der EP 0 852 545 B1 zu entnehmen. Eine andere Sitzgestaltung offenbart die DE 100 22 441 C2, wobei ebenfalls ein Kopfpolster auf einen Polsterträger angeordnet ist, der über ein Gestänge mit der Rückenlehne verbunden ist. Die DE 199 55 046 B4 offenbart ein gattungsgemässes Verfahren zur Funktionsanpassung vorhandener Sitze wobei ein aufstülpbares Stützkissen für Kopfstützen, welche einen Seitenhalt von serienmäßigen Kopfstützen verbessern soll, vorhanden ist.

Der Bedarf Bei vielen Serienfahrzeugen, insbesondere Kleinfahrzeugen finden Sitze Verwendung, die eine funktionsorientierte, einfache Gestaltung aufweist. Es besteht jedoch Bedarf für die Ausstattung solcher Fahrzeuge mit andersartigen Sitzen, insbesondere sogenannten Sportsitzen, die eine andere Art der Stützwirkung und Polsterung entfalten.

Um ein Serienfahrzeug mit Sportsitzen auszustatten, ist jedoch ein Sitzaustausch erforderlich, wobei ggf. Sitzkonsolen, also die Verbindungselemente zwischen Sitz und Fahrzeug, sowie oft auch die Laufschienen ausgetauscht werden. Wesentlich ist nämlich, dass die Sicherheitswirkung eines Sitzes auf das Fahrzeug abgestimmt ist und entsprechend die gesamte Sitz- und Stützstruktur der Zulassung unter sicherheitsrelevanten Prüfkriterien bedarf.

Aufgabe der Erfindung ist es, eine verbesserte Umrüstung für Fahrzeuge bereitzustellen.

Diese Aufgabe wird gelöst durch ein Verfahren mit den Merkmalen des Patentanspruches 1.

Gemäß der Erfindung wird die Stützstruktur des vorhandenen Sitzes, also das mechanisch stabile innere Skelett beibehalten, der Sitz jedoch in seiner Polsterstruktur und Bezugsstruktur geänderten Anforderungen angepasst. Die Erfindung betrifft dabei solche Sitze, deren Kopfstütze getrennt von der Rückenstütze ausgebildet ist und auch getrennt gepolstert ist. Also sind erfindungsgemäß Sitze umrüstbar, bei denen die Kopfstützenpolsterung nicht integral mit der RückenlehnenPolsterung ausgebildet ist.

Dazu wird erfindungsgemäß zunächst der äußere Bezug des Sitzes zumindest im Bereich der Kopfstütze und der Rückenlehne entfernt. Die Polsterung wird also freigelegt. Danach wird die Polsterstruktur der Kopfstütze zumindest teilweise entfernt, so dass die mechanisch stabile Stützstruktur der Kopfstütze freigelegt wird.

In einem nächsten Schritt wird ein neues Polsterelement als Umrüstpolster auf die Stützstruktur der Kopfstütze aufgesetzt, wobei das neue Polsterelement eine Aufnahme aufweist, welche der Stützstruktur der Kopfstütze angepasst ist und diese Aufnimmt. Das Umrüstpolster als neues Polsterelement sitzt entsprechend weitgehend spielfrei auf der Stützstruktur auf. Das neue Polsterelement ist außerdem so der vorhandenen Polsterstruktur des Sitzes, insbesondere der Polsterstruktur der Rückenlehne angepasst, dass es im Wesentlich spaltfrei auf die Polsterstruktur der Rückenlehne aufsetzbar ist. Dies bedeutet, dass das neue Kopfpolsterelement die Rückenlehne am oberen Ende der Polsterung im Wesentlichen entlang der gesamten Lehnenbreite der Rückenlehne überspannt und übergreift. Eine derartige Gestaltung einer Kopfstütze, die spaltfrei an die Rückenlehne anschließt, ist insbesondere aus dem Bereich der Sportsitze für Fahrzeuge bekannt. Dort geht die Kopfstütze mit einem nach oben sich verjüngernden Bereich zur Stützung der Schultern und zur Verbesserung des Seitenhaltes aus der Rückenlehne hervor. Außerdem existieren regelmäßig Öffnungen in der Kopfstütze, welche die Durchführung von Hosenträgergurten erlauben.

Erfindungsgemäß wird also zur Umrüstung des Sitzes eine Kopfstütze, die über einen Polsterträger mit der Rückenlehne eines Sitzes gekoppelt ist und einen Zwischenraum zwischen Kopf- und Rückenstütze aufweist ausgetauscht gegen eine Kopfstütze nach Art eines Sportsitzes, die eine breitere Abstützung und vollständige Aufnahme der ursprünglich freiliegenden Stützstreben zwischen Rückenlehne und Kopfstütze realisiert. Die zuvor freiliegenden Stützstreben, die sich als metallische Stützen aus dem Rückenlehnenbereich nach oben in die Kopfstütze erstreckten, werden erfindungsgemäß in dem neu aufgesetzten Polsterkörper aufgenommen.

Die neue Polsterung der Kopfstütze (Umrüstpolster) kann an dem vorhandenen Polsterträger fixiert werden, z.B. durch verkleben oder innenliegende Haltemittel wie Clips oder Klettverbinder.

Vorzugsweise besteht der neue Polsterkörper aus einem geschäumten Polsterkörper. Durch die angepasste Ausbildung des Polsterkörpers als gegenüber dem ursrpünglichen Kopfpolster verbreiterte und im Wesentlichen spaltfreie Anordnung auf die Polster der Rückenlehne wird eine andersartige, und sowohl vom Design als auch von der Polsterwirkung und beim Seitenhalt her angepasste Umrüstung des Kraftfahrzeugsitzes erreicht. Wesentlicher Vorteil der Erfindung ist dabei, dass die vorhandene Stützstruktur, welche die sicherheitsrelevante Struktur des Fahrzeugsitzes ist, unangetastet bleibt. Eine aufwendige Erprobung der Stützstruktur oder -zulassung ist hierbei regelmäßig nicht erforderlich. Außerdem bleiben Sitzkonsolen, Laufschienen und übrige Sitzkomponenten erhalten und im Fahrzeug angepasst. Die Umrüstung ist entsprechend wesentlich kostengünstiger als die Ausstattung eines entsprechenden Fahrzeuges mit einem zugelassenen Sportsitz.

Es ergibt sich außerdem unmittelbar der Vorteil, dass statt Ausbau und der Entsorgung eines Fahrzeugsitzes nun die Umrüstung und damit der ressourcenschonende Erhalt der Sitzstruktur und wesentlicher Sitzelemente verbleibt. Die Lösung ist also nachhaltiger gegenüber dem Austausch eines Sitzes zu Gunsten eines Sportsitzes.

Nachdem das neue Polsterteil auf den Sitz und die Stützstruktur der Kopfstütze aufgesetzt ist, wird ein angepasster Sitzbezug über die Sitzanordnung gezogen. Bezüglich der Sitzbezüge kann sowohl der gesamte Sitz, also die Kombination aus Sitzfläche als auch Rückenlehne mit Kopfstütze anfänglich vom Sitzbezug entkleidet werden und entsprechend neu überzogen werden, es kann auch lediglich der Bereich der Rückenlehne und der neuen Kopfstütze mit einem passenden Überzug versehen werden.

Vorzugsweise ist das im Verfahren neu aufgesetzte Kopfstützpolster integral als geschäumtes Teil ausgebildet, es ist jedoch grundsätzlich auch möglich, eine mehrteilige Polsteranordnung zu gestalten, welche eine Formanpassung an verschiedene Sitzmodelle erlaubt. Als Material kommen die bekannten Polstermaterialien aus dem Fahrzeugbau bzw. Fahrzeugsitzbau in Betracht. Insbesondere sind PolyurethanSchäume für die Herstellung der Polster geeignet. Die Lösung ist außerdem besonders sicher, da im Bereich der Verbindungselemente zwischen Fahrzeug und Sitz keine umfänglichen Manipulationen erforderlich sind, es bleibt bei der Aufnahme des Sitzes am Fahrzeug und der Verstellmöglichkeit, so wie bei der Fahrzeugkonstruktion vorgesehen.

Sämtliche sicherheitsrelevante Aspekte sind bei diesem Umrüstkonzept berücksichtigt, da die komplette Stützstruktur gemäß ursprünglicher Konstruktion erhalten bleibt und die Polsterung bei entsprechender Ausbildung des Ersatzpolsters sogar verbessert wird.

Die Erfindung wird nun anhand eines Ausführungsbeispiels näher erläutert.

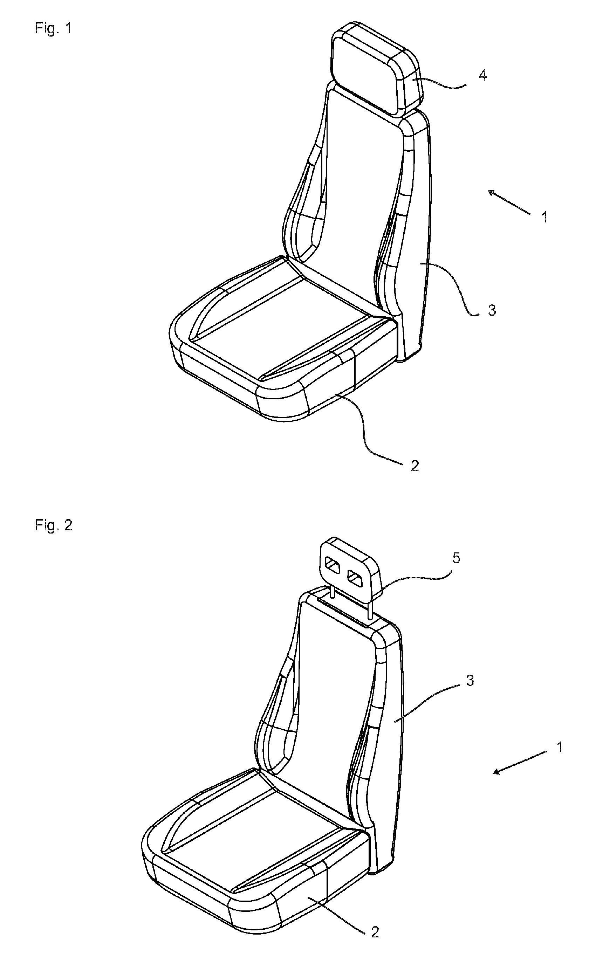

Figur 1 zeigt einen serienmäßigen Fahrzeugsitz 1 aus einem Kleinwagen. Der Fahrzeugsitz weist eine Sitzfläche 2, eine Rückenlehne 3 und eine Kopfstütze 4 auf. Die Kopfstütze ist über einen Polsterträger (siehe unten) mit der Rückenlehne verbunden. Kopfstütze und Rückenlehne sind getrennt gepolstert, zwischen Kopfstütze 4 und Rückenlehne 3 ist entsprechend ein Luftraum gebildet, der durch die Stützstruktur überbrückt wird. In Figur 1 ist der Sitz bereits von seinem Bezugsstoff oder Bezugsmaterial befreit, so dass hier im Wesentlichen die unterliegenden Polstermaterialien und Schaummaterialien dargestellt sind.

Figur 2 zeigt den Sitz aus Figur 1, wobei das Polstermaterial 4 der Kopfstütze entfernt ist und die Struktur des Polsterträgers 5 freigelegt ist. Dieser Polsterträger 5 stellt das mechanisch stabile Stützelement für den Kopf dar ist stabil mit der Rückenlehne 3 und den darin aufgenommenen Strukturen verbunden. Es wird also ersichtlich, dass erfindungsgemäß lediglich die Polsterkomponente der Kopfstütze 4 entfernt wird, die bereits vorhandene Struktur des Polsterträgers 5 jedoch am Sitz verbleibt.

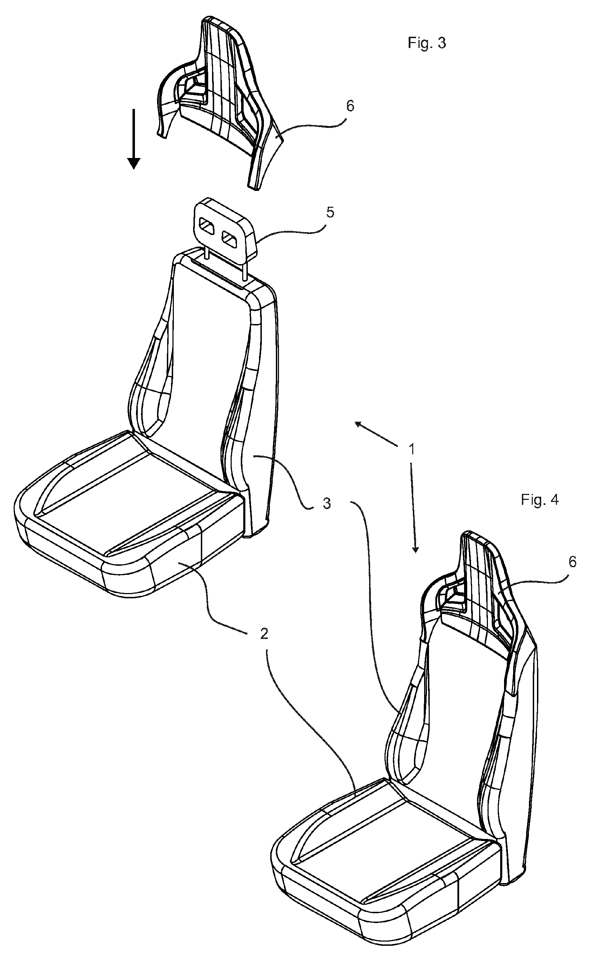

Figur 3 zeigt, dass ein neues, geschäumtes Polsterelement 6 auf die Polsterträgerstruktur 5 aufgesetzt wird. Dazu weist das neue Polsterelement 6 eine Aufnahme auf, die an die Form des Polsterträgers 5 angepasst ist. Es ist ersichtlich, dass die Polsterstruktur 6 zum Anschluss an die Polsterstruktur der Rückenlehne 3 im Schulterbereich angepasst ist und entsprechende Formteile aufweist. Außerdem weist das Polsterelement 6 Öffnungen auf. Das Polsterelement 6 sitzt auf dem Polstermaterial der Rückenlehne 3 auf, wie in Figur 4 gezeigt.

Figur 4 zeigt die Situation nach vollständigem Aufsetzen des Elementes 6 auf die Stützstruktur 5. Das Polsterelement 6 sitzt auf den Polsterkomponenten der Rückenlehne 3 im Wesentlich spaltfrei über die gesamte Breite der oberen Erstreckung der Rückenlehne 3. Dadurch wird ein gänzlich anderer Polstereffekt und eine andere Stützwirkung erzielt. Die Struktur des Polsterträgers 5 ist vollständig in dem neuen Polsterelement 6 aufgenommen, ebenso wie die Verbindungsstreben, die ursprünglich den Spaltraum zwischen Kopfstütze und Rückenlehne überbrückten.

Der so umgerüstete Polsterkörper enthält nach wie vor dieselben Stützelemente und Trägerelemente wie der ursprüngliche Sitz, erhält jedoch durch die abgewandelte Polsterung eine gänzlich neue Polsterwirkung und Erscheinung. Der Sitz kann ohne weiteres wieder in den ursprünglichen Fahrzeugbereich eingesetzt werden, da keine Anpassungen an Sitzkonsolen oder Laufschienen erforderlich sind. Zuvor ist der Sitz allerdings wieder mit entsprechenden Überzugsmaterialien zu versehen, welche auch die Mehrteiligkeit der Schaumkörper 6 und der Rückenlehne 3 überdecken und unsichtbar machen. Erfindungsgemäß kann dabei sowohl ausschließlich die Rückenlehne mit dem neuen Polsterkörper 6 mit einem Überzug versehen werden, der auf dem Polsterkörper 6 und die Rückenlehne angepasst ist, als auch der gesamte Sitz, einschließlich der Sitzfläche 2.

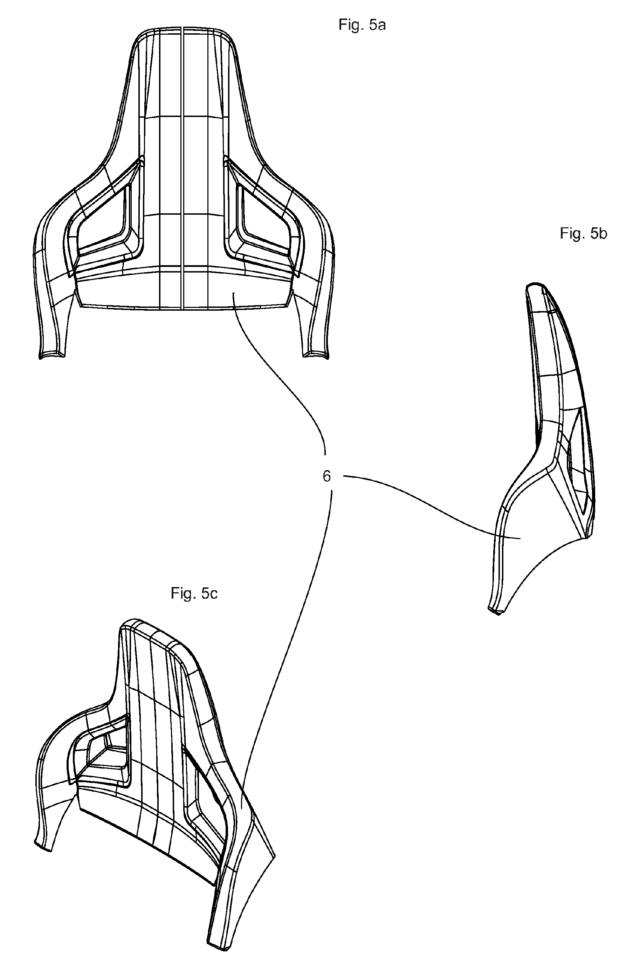

Die Figuren 5a, 5b, 5c zeigen den Ersatz-Polsterkörper gemäß dem Ausführungsbeispiel in eines separaten Darstellung von vorn, seitlich und in einer Schrägansicht. Wesentlich ist, dass der Ersatz-Polsterkörper die gesamte Stützstruktur des Vorhandenen Sitzes im Kopfbereich aufnimmt und auf der Polsterung der Rückenlehne aufliegt. Eine Verstellbarkeit der Kopfstütze ist damit unterbinden, da die Bewegung der Stützstruktur der Kopfstütze und Verbindungen zur Rückenlehne vollständig überdeckt sind. Es entsteht ein spaltfreier Polsterbereich, übergangslos nach Bezug mit einem Bezugsmaterial, so dass dieser Sitz von einem entsprechend gefertigten vollständigen Sitz nicht zu unterscheiden ist.

## Patentansprüche

1. Verfahren zum Umrüsten eines Fahrzeugsitzes (1) eines Personenkraftwagens, wobei der Fahrzeugsitz getrennte Polster für Kopfstütze (4) und Rückenlehne (3) aufweist und die Kopfstütze einen im Polster angeordneten Polsterträger (5) aufweist, wobei ein Zwischenraum zwischen Kopfstütze und Rückenlehne durch freiliegende Stützstreben überspannt ist, so dass der Polsterträger zur Aufnahme von einwirkenden Kräften mit einem Stützaufbau des Fahrzeugsitzes gekoppelt ist, **gekennzeichnet durch** die Schritte:
Entfernen eines Bezugs von dem ursprünglichen Polster der Kopfstütze,
Entfernen des ursprünglichen Polsters der Kopfstütze, um den darin angeordneten Polsterträger (5) zumindest teilweise freizulegen,
Aufbringen eines Umrüstpolsters auf den freigelegten Polsterträger, wobei das Umrüstpolster gegenüber dem ursprünglichen Polster abweichend geformt ist und wobei das Umrüstpolster den Polsterträger und die Stützstreben umschließt,
wobei das Umrüstpolster derart geformt ist und aufgesetzt wird, dass zwischen Rückenlehne und Umrüstpolster entlang der obere Rückenlehne eine unmittelbare Anlage des Umrüstpolsters an der Rückenlehne hergestellt wird,
Beziehen der Rückenlehne und des Umrüstpolsters mit einem Umrüstbezug.

2. Verfahren nach Anspruch 1, wobei neben dem Bezug der Kopfstütze (4) auch der Bezug der Rückenlehne entfernt wird.

3. Verfahren nach Anspruch 1 oder 2, wobei das Umrüstpolster wenigstens an dem Polsterträger (5) fixiert wird.

4. Verfahren nach einem der vorangehenden Ansprüche, wobei in dem Umrüstpolster Öffnungen vorgesehen werden, durch die Hosenträgergurte führbar sind.

5. Verfahren nach einem der vorangehenden Ansprüche, wobei das Umrüstpolster über die gesamte Breite der Rückenlehne an deren oberen Ende in unmittelbare Anlage gebracht wird, so dass die Rückenlehnenpolsterung über die gesamte Breite von unten nach oben in das Umrüstpolster übergeht.

## Claims

1. A method for converting a vehicle seat (1) of a passenger car, wherein the vehicle seat has separate upholsteries for headrest (4) and backrest (3) and the headrest has an upholstery carrier (5) arranged in the upholstery, wherein
an intermediate space between headrest and backrest is spanned by exposed supporting struts, so that the upholstery carrier is coupled with a support structure of the vehicle seat for receiving acting forces,
**characterized by** the steps:
removing of a cover from the original upholstery of the headrest,
removing of the original upholstery of the headrest, in order to at least partially expose the upholstery carrier (5) arranged therein,
applying a conversion upholstery onto the exposed upholstery carrier, wherein the conversion upholstery is shaped differently with respect to the original upholstery and wherein the conversion upholstery surrounds the upholstery carrier and the support struts,
wherein the conversion upholstery is shaped and put in place such that between backrest and conversion upholstery along the upper backrest a direct abutting of the conversion upholstery against the backrest is brought about,
covering of the backrest and of the conversion upholstery with a conversion cover.

2. The method according to Claim 1, wherein in addition to the cover of the headrest (4), the cover of the backrest is also removed.

3. The method according to Claim 1 or 2, wherein the conversion upholstery is fixed at least on the upholstery carrier (5).

4. The method according to one of the preceding claims, wherein openings are provided in the conversion upholstery, through which belt harnesses are able to be guided.

5. The method according to one of the preceding claims, wherein the conversion upholstery is brought into direct abutment over the entire width of the backrest against the upper end thereof, so that the backrest upholstering continues over the entire width from bottom to top into the conversion upholstery.

## Revendications

1. Procédé de rééquipement d'un siège de véhicule (1) d'un véhicule automobile personnel, dans lequel le siège de véhicule présente des rembourrages séparés pour les appuie-têtes (4) et les dossiers de sièges (3) et l'appui-tête présente un support de rembourrage (5) disposé dans le rembourrage, dans lequel un espace intermédiaire entre les appuie-têtes et les dossiers de sièges est enjambé par un montant d'appui exposé, de sorte que le support de rembourrage afin d'absorber les forces qui s'exercent soit couplé à une structure d'appui du siège du véhicule, **caractérisé par** les étapes consistant à :
retirer une housse du rembourrage d'origine de l'appuie-tête ;
retirer le rembourrage d'origine de l'appui-tête, pour exposer au moins partiellement le support de rembourrage (5) disposé dans celui-ci ;
appliquer un rembourrage de rééquipement sur le support de rembourrage exposé, dans lequel le rembourrage de rééquipement est formé de manière à différer par rapport au rembourrage d'origine et dans lequel le rembourrage de rééquipement englobe le support de rembourrage et les montants d'appui ;
dans lequel le rembourrage de rééquipement est façonné et posé de telle sorte que entre l'appui-tête et le rembourrage de rééquipement le long du dossier de sièges supérieur un positionnement direct du rembourrage de rééquipement sur le dossier de siège soit établi,
recouvrir le dossier de siège et le rembourrage de rééquipement avec une housse de rééquipement.

2. Procédé selon la revendication 1, dans lequel en plus de la housse de l'appuie-tête (4), la housse du dossier de siège est aussi retirée.

3. Procédé selon la revendication 1 ou 2, dans lequel le rembourrage de rééquipement est fixé au moins sur le support de rembourrage (5).

4. Procédé selon une des revendications précédentes, dans lequel dans le rembourrage de rééquipement des ouvertures sont prévues, à travers lesquelles des ceintures harnais peuvent être guidées.

5. Procédé selon une des revendications précédentes, dans lequel le rembourrage de rééquipement est appliqué sur la totalité de la largeur des dossiers de siège en positionnement direct sur leur extrémité supérieure, de sorte que le rembourrage de dossier de siège sur la totalité de la largeur aboutisse du bas vers le haut dans le rembourrage de rééquipement.
